# FASCICULE DE BREVET EUROPEEN

(11) **EP 1 273 425 B1**
(45) Date de publication et mention de la délivrance du brevet: **28.11.2007**
(21) Numéro de dépôt: 02291662.1
(22) Date de dépôt: 03.07.2002
(51) Int. Cl.: B29C 47/06, B32B 27/32, C08J 5/18, C08L 77/00, C08L 23/10, B65D 65/40

(54) **Structure multicouche pour le conditionnement de produits alimentaires et procédé de fabrication de ladite structure**
Mehrschichtmaterial zum Verpacken von Lebensmitteln und Verfahren zur Herstellung
Multilayer structure for packaging food products and method of manufacture

(30) Priorité: 06.07.2001 FR 0109024
(43) Date de publication de la demande: 08.01.2003
(73) Titulaire: Huhtamaki France S.A., 28700 Auneau (FR)
(72) Inventeur: Moreau, Christophe, 28300 Champhol (FR); Nourry, Hervé, 28150 Prasville (FR)
(74) Mandataire: Debay, Yves

(56) Documents cités:
- EP-A- 0 476 895
- EP-A- 0 787 761
- WO-A-96/09347
- WO-A-98/30389
- WO-A-99/32287
- GB-A- 2 210 376
- DATABASE WPI Section Ch, Week 199349 Derwent Publications Ltd., London, GB; Class A17, AN 1993-392823 XP002193042 & JP 05 295191 A (SANYO CHEM IND LTD), 9 novembre 1993 (1993-11-09)

## Description

La présente invention concerne une structure multicouche pour le conditionnement de produits alimentaires. La présente invention concerne également un procédé de fabrication de cette structure multicouche.

Dans l'art antérieur, il est connu lors de la fabrication de pots préformés, en polystyrène ou en polypropylène, par exemple pour des produits laitiers, d'ajouter des additifs antistatiques. Ce traitement antistatique permet en particulier d'éviter que des poussières viennent s'agglomérer sur la surface du pot lors de manipulations, de stockage, de convoyage du pot ou de frottement du pot et ainsi donner un aspect inesthétique au produit lorsque celui-ci est sur les linéaires.

Ce traitement antistatique a d'abord été réalisé avec des additifs constitués de gras mélangé avec le polypropylène ou le polystyrène et qui vont migrer avec le temps vers la surface du pot pour créer une fine pellicule sur la surface du pot. Cette pellicule hydrophile sera chargée de dissiper les charges électriques apparaissant sur la surface du pot lors des manipulations ou des frottements du pot.

Toutefois, ce type d'additif est tributaire de l'humidité ambiante. Cela signifie que par période humide cette pellicule sera efficace alors qu'en période sèche, elle le sera beaucoup moins. De plus, ces additifs ne sont pas permanents et disparaissent en se volatilisant au fur et à mesure qu'ils parviennent jusqu'à la surface du pot. Certes, il est possible de mettre des additifs ayant des effets à court terme ou à long terme mais ceci ne constitue pas une solution satisfaisante, la durée de vie des produits contenus dans les pots préformés étant très variable.

Une solution à ces problèmes consiste à placer une couche d'un composé antistatique sur la surface du pot. Ce produit antistatique est par exemple, dans le cas où le pot est en polypropylène, à base de polypropylène et de polyéther block amide (connu sous le nom de PEBA). Ce composé, à l'inverse des produits utilisés dans l'art antérieur, est non tributaire de l'humidité ambiante et est permanent. Ce produit présente également l'avantage par rapport à d'autres composés antistatiques d'être agréé pour l'alimentaire.

Ce composé est disposé sous forme d'une couche sur la surface du pot à protéger constituée de polypropylène.

Il est connu dans l'art antérieur, par le brevet WO 98 30389, des films d'emballage antistatiques comprenant une couche de polyamide ou d'un alliage de polyamide et de polyoléfine et dans lesquels est dispersé comme additif antistatique, au niveau d'une couche extérieure, un polymère à blocs polyamide et blocs polyéther PEBA. Ce type de films est utile pour emballer le polystyrène expansible qui contient du pentane ou d'autres matières diffusant des produits volatils comme le pentane. Bien que présentant de bonnes propriétés antistatiques, ce type de films d'emballage n'est pas adapté au conditionnement de produits alimentaires, et notamment de produits laitiers. Ces films d'emballage manquent considérablement de rigidité par rapport à des matériaux thermoformés constitués essentiellement de polypropylène.

Pendant le thermoformage d'un pot, en particulier des surfaces latérales du pot, l'étirement des surfaces peut provoquer un décrochage de la couche de PEBA. Ceci ne pose pas de problème lors de l'usage du pot mais devient rédhibitoire lors de l'impression effectuée sur la surface du pot, un pelage de la couche de PEBA étant alors observée. Ce problème peut être évité en déposant une couche très épaisse de PEBA sur le pot, toutefois le PEBA est un produit cher et il pourrait paraître intéressant de ne mettre qu'une fine couche de PEBA pour ne pas augmenter considérablement les coûts de production.

La présente invention a donc pour objet de pallier les inconvénients de l'art antérieur en proposant un moyen de disposer une fine couche de PEBA sur le polypropylène, cette couche de PEBA ne subissant aucun décrochage lors de la phase de la fabrication ou de l'impression.

Ce but est atteint par une structure multicouche obtenue par coextrusion et destinée au conditionnement de produits alimentaires, caractérisée en ce qu'elle comprend au moins deux couches superposées,
- une couche d'un composé antistatique permanent à base de polypropylène et de polyéther block amides (PEBA),
- une couche de structure, dite première couche de structure, comprenant un mélange d'anhydride maléique greffé sur du polypropylène homopolymère et de polypropylène sous forme de copolymère.

Selon une autre particularité, le polypropylène de la première couche de structure comprend au minimum 30% de copolymère de polypropylène.

Selon une autre particularité, la structure comprend une couche de structure, dite deuxième couche de structure, sur la première couche de structure, cette deuxième couche de structure comprenant du polypropylène.

Selon une autre particularité, la structure comprend une couche de contact alimentaire située à l'extérieur sur la deuxième couche de structure comprenant du polypropylène de fluidité supérieure au polypropylène de la première couche de structure et de la deuxième couche de structure.

Selon une autre particularité, entre la première couche de structure et la deuxième couche de structure est intercalée une couche de polymère barrière à l'oxygène, cette couche barrière à l'oxygène étant liée à chacune de la première couche de structure et de la deuxième couche de structure par une couche adhésive comprenant de l'anhydride maléique greffé sur du polypropylène.

Selon une autre particularité, entre la couche adhésive de la couche barrière à l'oxygène sur la deuxième couche de structure et la deuxième couche de structure est intercalée une couche de structure, dite troisième couche de structure comprenant du polypropylène.

Selon une autre particularité, la première couche de structure est divisée en deux couches distinctes, une couche de structure, dite quatrième couche de structure, comprenant du polypropylène et une couche adhésive assurant l'accrochage de cette dernière couche de structure avec la couche antistatique et comprenant de l'anhydride maléique greffé sur du polypropylène.

Selon une autre particularité, chaque couche de structure comprend un mélange à base de polyoléfine et de pigments organiques et/ou minéraux pour la coloration du polypropylène.

Selon une autre particularité, la couche polymère barrière à l'oxygène est à base d'EVOH (copolymère d'éthylène et d'alcool polyvinylique).

Selon une autre particularité, la couche polymère barrière à l'oxygène consiste en EVOH.

Selon une autre particularité, la première, la troisième et la quatrième couche de structure comprennent un broyé de la structure multicouche obtenue.

Selon une autre particularité, la première couche de structure, la troisième couche de structure et la quatrième couche de structure, comprennent un mélange à base de polyoléfine et de matière active et neutralisante pour permettre le recyclage du broyé lorsque celui-ci est obtenu à partir d'une structure comprenant de l'EVOH.

Selon une autre particularité, le polypropylène de la deuxième, troisième et quatrième couche de structure est à base d'homopolymère de polypropylène et/ou de copolymère de polypropylène.

Selon une autre particularité, la couche de composé antistatique a une épaisseur représentant 1,5% maximum de l'épaisseur totale de la structure.

Un autre but de l'invention est de proposer un procédé pour fabriquer la structure multicouche selon l'invention.

Ce but est atteint par un procédé pour fabriquer la structure multicouche décrite ci-dessus, caractérisé en ce qu'il comprend,
- l'introduction de chaque matière constituant chaque couche de la structure dans une extrudeuse,
- l'introduction de la matière sortant d'une extrudeuse et constituant une couche de la structure, dans un canal central d'un répartiteur alimentant une filière de fabrication de feuilles multicouches,
- l'introduction des matières sortant des autres extrudeuses et constituant les autres couches de la structure, chacune, dans un élément du répartiteur, ces éléments étant juxtaposés le long du répartiteur et comportant chacun un canal débouchant dans le canal central relié à la filière.

L'invention, avec ses caractéristiques et avantages, ressortira plus clairement à la lecture de la description faite en référence aux dessins annexés dans lesquels :
- la figure 1 représente schématiquement l'installation de coextrusion,
- les figures 2a et 2 b représentent une variante de la configuration de la structure selon l'invention, respectivement symétrique et asymétrique,
- la figure 3 représente une variante à la configuration à la structure selon l'invention,
- les figures 4a et 4b représentent une autre variante de la configuration de la structure selon l'invention, respectivement symétrique et asymétrique,
- la figure 5 représente une variante à la configuration de la structure selon l'invention,
- la figure 6 représente un répartiteur utilisé dans l'installation sur lequel est indiquée la répartition des couches de la structure des figures 4a et 4b.

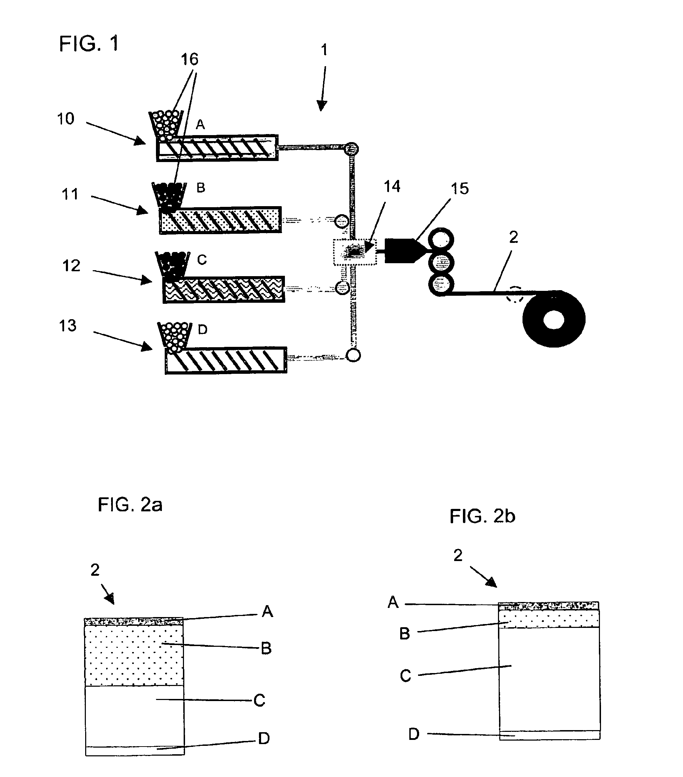

L'invention va à présent être décrite en liaison avec les figures 1 à 6.

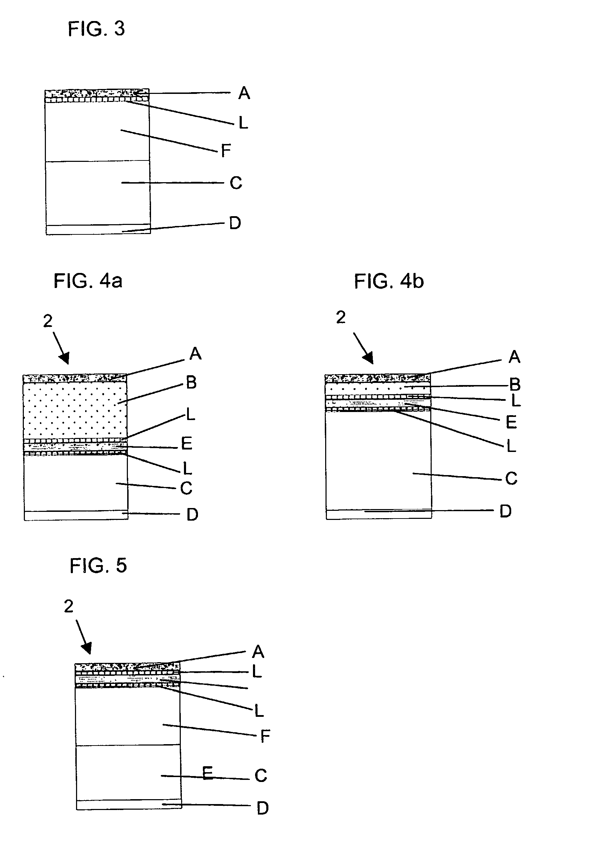

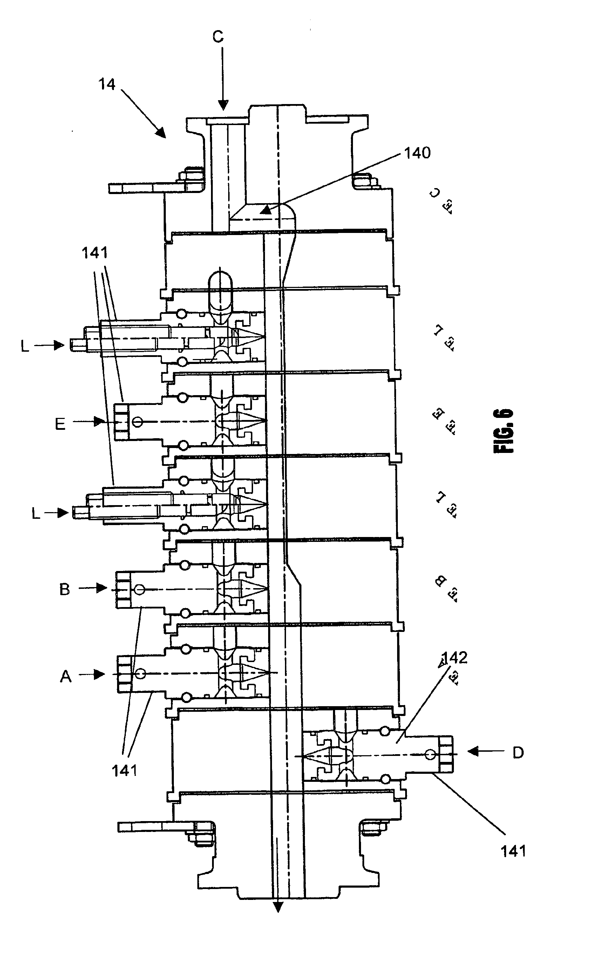

La structure (2) multicouche selon l'invention est obtenue par coextrusion simultanée des différentes couches. L'installation (1) de coextrusion comportera un certain nombre d'extrudeuses (10, 11, 12, 13) dans lesquelles sont introduits les granulés (16), une extrudeuse (10, 11, 12, 13) pour chaque couche, et un répartiteur (14) de couches permettant de réunir les couches avant leur introduction dans une filière (15). Cette installation (1) sera conforme à celle décrite dans les brevets FR 2 593 111 et FR 2 437 289 dont la requérante est titulaire. Un répartiteur (14) utilisé pour la formation d'une structure ayant une configuration spécifique décrite ci-dessous et représentée en figures 4a, et 4b, est représenté en figure 6. Un répartiteur comporte un canal central (140) raccordé à l'entrée de la filière (15). Le long de ce canal central (140) sont placés plusieurs éléments juxtaposés, un élément (141) pour chaque couche de la structure à fabriquer. Chacun de ces éléments (141) juxtaposés comporte un canal radial relié à une sortie de matière d'une extrudeuse (10, 11, 12, 13) et débouchant sur le canal central (140). Chaque élément (141) comporte un organe de réglage de la quantité de matière à déposer.

Selon l'invention, la structure (2) multicouche comprend une couche (A) constitué d'un composé antistatique permanent à base de polypropylène (PP) et de polyéther block amides (PEBA). Ce composé pourra être, par exemple, celui fabriqué par la société "SCHULMAN PLASTICS" et distribué sous la désignation commerciale "POLYSTAT NATURAL P 62381". Lors de la fabrication, par exemple, d'un pot pour produits laitiers, cette couche sera à l'extérieur pour exercer son action antistatique. Cette couche aura une épaisseur moyenne constituant 1,5% de l'épaisseur totale de la structure multicouche.

Sur cette couche antistatique est disposée une première couche de structure (B). Cette couche de structure est ajoutée pour ses propriétés thermo-mécaniques et physico-chimiques. En effet, en particulier, cette première couche de structure (B) constituera une barrière à la vapeur d'eau et conférera à la structure obtenue, une résistance au corps gras, à la température et une résistance à l'impact, c'est-à-dire une plus grande solidité. De plus, selon l'invention, cette première couche de structure (B) constituera une couche de support et d'accrochage de la couche antistatique (A). Cette première couche de structure sera constituée d'un mélange de plusieurs composés. Ce mélange comprend notamment du polypropylène non modifié ainsi que du polypropylène modifié comprenant des greffes d'anhydride maléique. L'anhydride maléique est d'abord greffé sur du polypropylène homopolymère et ce polypropylène muni de greffes d'anhydride maléique est mélangé avec le polypropylène non modifié du mélange. La formule de l'anhydride maléique est C₄H₂O₃ et sa formule développée est la suivante.

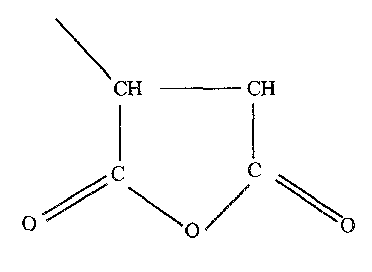

Le polypropylène homopolymère greffé d'anhydride maléique est vendu, par exemple, sous la marque déposée "OREVAC CA 100" et fabriqué par la société "ATOFINA". Les greffes d'anhydride maléique réagissent chimiquement avec les fonctions alcools des séquences amides de la couche antistatique (A) en créant des liaisons covalentes à l'interface entre les deux couches (A, B). Cette formation de liaisons covalentes entre l'anhydride maléique et les fonctions alcools des séquences amides du PEBA de la couche antistatique permet d'assurer un bon accrochage de la couche antistatique (A) sur cette première couche de structure (B). Ce moyen d'accrochage permet en particulier d'éviter le décrochage de la couche antistatique (A) lors d'étirements de la structure (2) ou de l'impression et permet donc également de s'affranchir de disposer une couche épaisse d'antistatique. Le polypropylène non modifié du mélange, c'est-à-dire non greffé avec de l'anhydride maléique, comprendra du polypropylène copolymère. Le polypropylène copolymère comprend du polypropylène et de l'éthylène et est obtenu par polymérisation de polypropylène et d'éthylène. En revanche le polypropylène homopolymère est obtenu par polymérisation de polypropylène uniquement. Le polypropylène copolymère est plus visqueux et plus rugueux que le polypropylène homopolymère. En revanche, le polypropylène homopolymère présente l'avantage d'être plus rigide. Le mélange de cette première couche de structure (B) devra être constitué au minimum de 30% de polypropylène copolymère et de 3 à 5% de polypropylène modifié par l'anhydride maléique. Le reste du mélange pourra comprendre du polypropylène homopolymère, qui présente l'avantage aujourd'hui d'être moins cher que le polypropylène copolymère. Le reste du mélange pourra comprendre également un mélange-maître à base de polyoléfine et de pigments organiques et/ou minéraux pour obtenir la coloration du polypropylène du mélange. Le mélange pourra comprendre également un broyé de la structure (2) finale coextrudée provenant, par exemple, de rebuts de production, cette structure finale pouvant varier en fonction du nombre de couches que l'on souhaite. Ces couches composant la structure seront explicitées ci-après. Le mélange pourra comprendre également un mélange maître à base de polyoléfine avec de la matière active anti-acide et neutralisante, ce mélange maître permettant de recycler le broyé lorsque celui-ci comprend de l'EVOH, l'EVOH étant un copolymère d'éthylène et d'alcool polyvinylique, la teneur molaire d'éthylène par rapport à l'alcool polyvinylique pouvant aller de 29 à 44%.

Cette première couche de structure aura une épaisseur pouvant représenter 30 à 98,5% de l'épaisseur totale de la structure.

Sur cette première couche de structure peut être ajoutée une deuxième couche de structure (C) ayant les mêmes propriétés thermo-mécaniques et physico-chimiques que la première couche de structure (B). Cette couche sera composée d'un mélange pouvant comprendre des taux variables de polypropylène homopolymère et de polypropylène copolymère. Le mélange pourra comprendre également comme dans la première couche de structure (B) un mélange-maître à base de polyoléfine et de pigments organiques et/ou minéraux pour la coloration du polypropylène. Ce mélange constituant cette deuxième couche de structure (C) pourra être constitué de 100% de polypropylène homopolymère ou inversement de 100% de polypropylène copolymère. L'homopolymère est plus rigide que le copolymère et le choix des proportions de copolymère et/ou d'homoplymère dans le mélange sera dicté par les propriétés que l'on souhaite conférer à la structure finale. Cette deuxième couche de structure aura une épaisseur pouvant représenter 30 à 50% de l'épaisseur totale de la structure.

Sur cette deuxième couche de structure (C) peut être ajoutée une nouvelle couche de contact (D) alimentaire. Dans le domaine de l'alimentation et en particulier dans celui des pots préformés pour produits laitiers, cette couche sera en contact direct avec le produit contenu dans le pot. Cette couche (D) permet en particulier d'obtenir de bonnes conditions pour le thermoscellage d'un l'opercule sur un pot en conférant une bonne étanchéité au pot lors de cette opération. Cette couche sera constituée d'un polypropylène naturel homopolymère ou copolymère, présentant une fluidité supérieure aux mélanges des première et deuxième couches de structure (B, C) afin d'améliorer le comportement à la coextrusion. Cette couche de contact (D) alimentaire aura une épaisseur pouvant représenter 2 à 5% de l'épaisseur totale de la structure.

La configuration comprenant les couches superposées décrites ci-dessus, c'est à dire une couche d'antistatique (A), la première couche de structure (B), la deuxième couche de structure (C) et la couche de contact (D) alimentaire est représentée en figures 2a et 2b. Sur la figure 2a, la structure est symétrique.

Selon une autre configuration de la structure représentée en figure 3, sans s'éloigner du cadre de l'invention, la première couche de structure est remplacée par deux couches distinctes. Dans ces deux couches, on trouve une couche de structure (F), dite troisième couche de structure (F), et une couche adhésive d'un liant (L) intercalée entre cette troisième couche de structure (F) et la couche antistatique (A) et permettant d'assurer l'accrochage de la couche antistatique sur cette quatrième couche de structure (F). La troisième couche de structure (F) a des propriétés thermo-mécaniques et physico-chimiques les mêmes que celles de la première couche de structure (B). En particulier, ces propriétés seront la barrière à la vapeur d'eau, la résistance aux corps gras, à la température et à l'impact. Cette couche sera constituée d'un mélange comprenant notamment du polypropylène homopolymère et/ou copolymère. Aucune proportion minimale de polypropylène copolymère n'est exigée dans le mélange constituant cette couche. Comme dans la première couche de structure (B), le mélange de cette troisième couche de structure pourra comprendre un mélange-maître à base de polyoléfine et de pigments organiques et/ou minéraux pour la coloration du polypropylène. De même, le mélange pourra comprendre du broyé de la structure finale obtenue provenant, par exemple, des rebuts de production. Ce mélange pourra comprendre enfin un mélange-maître à base de polyoléfine avec de la matière active anti-acide et neutralisante permettant le recyclage du broyé lorsque celui-ci comprend de l'EVOH. Cette troisième couche de structure aura une épaisseur pouvant représenter 30 à 95% de l'épaisseur totale. En revanche ce mélange ne comprend pas de polypropylène comportant des greffes d'anhydride maléique pour améliorer l'accrochage et l'adhésion de la couche antistatique (A).

En effet, la fonction accrochage de la couche antistatique (A) est assurée dans cette configuration de la structure (2) par une couche (L) intercalée entre la troisième couche de structure (F) décrite ci-dessus et la couche antistatique (A).

Cette couche adhésive de la couche antistatique (A) est constituée de polypropylène comportant des greffes d'anhydride maléique. L'anhydride maléique réagit chimiquement avec les fonctions OH des séquences amides du PEBA de la couche antistatique (A) en créant des liaisons covalentes à l'interface entre les deux couches (A, L). Cette couche pourra représenter 2 à 5% de l'épaisseur totale de la structure.

Il est intéressant d'ajouter à la structure, une couche (E) faisant barrière à l'oxygène et aux arômes pour protéger le produit contenu dans le pot. Cette couche (E) fonctionnelle barrière à l'oxygène et aux arômes est constituée d'un copolymère d'éthylène et d'alcool polyvinylique, appelé EVOH. La teneur molaire de l'éthylène par rapport à l'alcool polyvinylique va de 29 à 44%. Cette couche aura une épaisseur pouvant représenter 2 à 8% de l'épaisseur totale.

Dans le cas où la structure comprend une couche fonctionnelle d'EVOH (E), il sera nécessaire d'accrocher cette couche avec des couches adhésives. Cette couche fonctionnelle d'EVOH (E) sera, par exemple, placée entre la première couche de structure (B) et la deuxième couche de structure (C), la couche d'antistatique (A) étant superposée à la première couche de structure (B) et la deuxième couche de structure (C) superposée à la couche de contact (D) alimentaire. La couche d'EVOH adhère à la première couche de structure (B) par une première couche adhésive et à la deuxième couche de structure (C) par une seconde couche adhésive. Ces couches adhésives sont semblables à celles utilisées pour l'accrochage de la couche antistatique (A). Elles pourront représenter chacune une épaisseur allant de 2 à 5% de l'épaisseur totale. Ces couches adhésives (L) sont donc constitués de polypropylène comprenant des greffes d'anhydride maléique réagissant chimiquement avec les fonctions OH de l'EVOH en créant des liaisons covalentes aux deux interfaces entre la couche d'EVOH et respectivement la première couche de structure (B) et la deuxième couche de structure (C). Cette dernière configuration est représentée en figure 4a et 4b, la figure 4a représentant le cas où la structure est symétrique. Le répartiteur (14) de couches utilisé dans l'installation pour former la structure (2) ayant cette configuration est représentée en figure 6. Sur cette figure 6, la deuxième couche de structure (C) est introduite dans le canal central (140) du répartiteur (14) relié à l'entrée de la filière (15), tandis que les autres couches (D, A, B, L, E, L) arrivent chacune par un élément (141) disposé le long du canal central (140). Une première couche de liant (L) vient se déposer sur une face de la première couche de structure (C), ensuite la couche barrière à l'oxygène (E) vient se déposer sur cette couche de liant (L), puis une deuxième couche de liant (L) vient se déposer sur la couche barrière à l'oxygène (E), la première couche de structure (B) vient se déposer sur la deuxième couche de liant (L), la couche antistatique (A) vient se déposer sur la première couche de structure (B) et enfin, avant l'entrée dans la filière (15), la couche de contact (D) alimentaire vient se déposer sur l'autre face de la deuxième couche de structure (C).

Une variante à cette configuration représentée en figure 5 consiste à remplacer la première couche de structure (B) comprenant du polypropylène avec des greffes d'anhydride maléique par la troisième couche de structure (F) telle que décrite ci-dessus. Selon cette configuration, cette troisième couche de structure est intercalée entre la seconde couche de structure et la seconde couche adhésive de la couche d'EVOH. La couche d'antistatique n'est donc plus accrochée sur la structure par l'anhydride maléique greffé sur le polypropylène de la première couche de structure (B) mais par la première couche adhésive (L) de la couche d'EVOH. En effet, comme déjà décrit ci-dessus, les couches adhésives comprennent du polypropylène avec des greffes d'anhydride maléique réagissant avec les séquences amides du PEBA de la couche antistatique (A).

Les configurations décrites ci-dessus ne sont aucunement limitatives et d'autres agencements entre les couches de la structure (2) pourront être envisagés.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Structure (2) multicouche obtenue par coextrusion et destinée au conditionnement de produits alimentaires, **caractérisée en ce qu'**elle comprend au moins deux couches superposées,
- une couche (A) d'un composé antistatique permanent à base de polypropylène et de polyéther block amides (PEBA),
- une couche de structure, dite première couche de structure (B), comprenant un mélange d'anhydride maléique greffé sur du polypropylène homopolymère et de polypropylène sous forme de copolymère.

2. Structure selon la revendication 1, **caractérisée en ce que** le polypropylène de la première couche de structure (B) comprend au minimum 30% de copolymère de polypropylène.

3. Structure selon la revendication 1 ou 2, **caractérisée en ce qu'**elle comprend une couche de structure, dite deuxième couche de structure (C), sur la première couche de structure (B), cette deuxième couche de structure (C) comprenant du polypropylène.

4. Structure selon l'une des revendications 1 à 3, **caractérisée en ce qu'**elle comprend une couche de contact (D) alimentaire située à l'extérieur sur la deuxième couche de structure comprenant du polypropylène de fluidité supérieure au polypropylène de la première couche de structure (B) et de la deuxième couche de structure (C).

5. Structure selon la revendication 4, **caractérisée en ce qu'**entre la première couche de structure (B) et la deuxième couche de structure (C) est intercalée une couche de polymère barrière à l'oxygène (E), cette couche barrière à l'oxygène (E) étant liée à chacune de la première couche de structure (B) et de la deuxième couche de structure (C) par une couche adhésive (L) comprenant de l'anhydride maléique greffé sur du polypropylène.

6. Structure selon la revendication 5, **caractérisée en ce qu'**entre la couche adhésive (L) de la couche barrière à l'oxygène (E) sur la deuxième couche de structure (C) et la deuxième couche de structure (C) est intercalée une couche de structure, dite troisième couche de structure (F) comprenant du polypropylène.

7. Structure selon la revendication 4, **caractérisée en ce que** la première couche de structure (B) est divisée en deux couches distinctes, une couche de structure, dite quatrième couche de structure (F), comprenant du polypropylène et une couche adhésive (L) assurant l'accrochage de cette dernière couche de structure (F) avec la couche antistatique (A) et comprenant de l'anhydride maléique greffé sur du polypropylène.

8. Structure selon l'une des revendications 1 à 7, **caractérisée en ce que** chaque couche de structure (B, C, F) comprend un mélange à base de polyoléfine et de pigments organiques et/ou minéraux pour la coloration du polypropylène.

9. Structure selon la revendication 5, **caractérisée en ce que** la couche polymère barrière à l'oxygène (E) est à base d'EVOH (copolymère d'éthylène et d'alcool polyvinylique).

10. Structure selon la revendication 5, **caractérisée en ce que** la couche polymère barrière à l'oxygène (E) consiste en EVOH.

11. Structure selon l'une des revendications 1 à 10, **caractérisée en ce que** la première (B), la troisième (F) et la quatrième couche (F) de structure comprennent un broyé de la structure (2) multicouche obtenue.

12. Structure selon l'une des revendications 1 à 11, **caractérisée en ce que** la première couche de structure (B), la troisième couche de structure (F) et la quatrième couche de structure (F), comprennent un mélange à base de polyoléfine et de matière active et neutralisante pour permettre le recyclage du broyé lorsque celui-ci est obtenu à partir d'une structure (2) comprenant de l'EVOH.

13. Structure selon l'une des revendications 4 à 12, **caractérisée en ce que** le polypropylène de la deuxième (C), troisième (F) et quatrième couche (F) de structure est à base d'homopolymère de polypropylène et/ou de copolymère de polypropylène.

14. Structure selon l'une des revendications 1 à 13, **caractérisée en ce que** la couche de composé antistatique a une épaisseur représentant 1,5% maximum de l'épaisseur totale de la structure.

15. Procédé pour fabriquer la structure (2) multicouche des revendications 1 à 14, **caractérisé en ce qu'**il comprend,
- l'introduction de chaque matière constituant chaque couche de la structure (2) dans une extrudeuse,
- l'introduction de la matière sortant d'une extrudeuse (10, 11, 12, 13) et constituant une couche de la structure (2), dans un canal central (140) d'un répartiteur (14) alimentant une filière (15) de fabrication de feuilles multicouches,
- l'introduction des matières sortant des autres extrudeuses (10, 11, 12, 13) et constituant les autres couches de la structure, chacune, dans un élément (141) du répartiteur (14), ces éléments (141) étant juxtaposés le long du répartiteur (14) et comportant chacun un canal (142) débouchant dans le canal central (140) relié à la filière (15).

## Claims

1. Multilayer structure (2) obtained by coextrusion and intended for the packaging of food products, **characterised in that** it comprises at least two superimposed layers,
- a layer (A) of a permanent antistatic compound based on polypropylene and polyether block amides (PEBA),
- a structure layer, denoted as the first structure layer (B), comprising a mixture of maleic anhydride grafted onto polypropylene homopolymer and polypropylene in copolymer form.

2. Structure as claimed in Claim 1, **characterised in that** the polypropylene of the first structure layer (B) comprises at least 30% of the polypropylene copolymer.

3. Structure as claimed in Claim 1 or 2, **characterised in that** it comprises a structure layer, denoted as the said second structure layer (C), on the first structure layer (B), this second structure layer (C) comprising polypropylene.

4. Structure as claimed in any one of Claims 1 to 3, **characterised in that** it comprises a food contact layer (D) situated externally on the second structure layer comprising polypropylene with a fluidity greater than the polypropylene of the first structure layer (B) and of the second structure layer (C).

5. Structure as claimed in Claim 4, **characterised in that** between the first structure layer (B) and the second structure layer (C) there is interposed an oxygen barrier polymer layer (E), this oxygen barrier polymer layer (E) being connected to each of the first structure layer (B) and the second structure layer (C) by an adhesive layer (L) comprising maleic anhydride grafted onto polypropylene.

6. Structure as claimed in Claim 5, **characterised in that** between the adhesive layer (L) of the oxygen barrier layer (E) on the second structure layer (C) and the second structure layer (C) itself there is interposed a structure layer denoted as the third structure layer (F) comprising polypropylene.

7. Structure as claimed in Claim 4, **characterised in that** the first structure layer (B) is divided into two distinct layers, a structure layer denoted as the fourth structure layer (F) comprising polypropylene and an adhesive layer (L) ensuring the bonding of this latter structure layer (F) to the antistatic layer (A) and comprising maleic anhydride grafted onto polypropylene.

8. Structure as claimed in any one of Claims 1 to 7, **characterised in that** each structure layer (B, C, F) comprises a mixture based on polyolefin and organic and/or mineral pigments for colouring the polypropylene.

9. Structure as claimed in Claim 5, **characterised in that** the oxygen barrier polymer layer (E) is based on EVOH (ethylene and polyvinyl alcohol copolymer).

10. Structure as claimed in Claim 5, **characterised in that** the oxygen barrier polymer layer (E) consists of EVOH.

11. Structure as claimed in any one of Claims 1 to 10, **characterised in that** the first structure layer (B), the third structure layer (F) and the fourth structure layer (F) comprise a ground material of the multilayer structure (2) obtained.

12. Structure as claimed in any one of Claims 1 to 11, **characterised in that** the first structure layer (B), the third structure layer (F) and the fourth structure layer (F) comprise a mixture based on polyolefin and active and neutralising material in order to permit recycling of the ground material when this is obtained from a structure (2) comprising EVOH.

13. Structure as claimed in any one of Claims 4 to 12, **characterised in that** the polypropylene of the second structure layer (C), the third structure layer (F) and the fourth structure layer (F) is based on a polypropylene homopolymer and/or a polypropylene copolymer.

14. Structure as claimed in any one of Claims 1 to 13, **characterised in that** the layer of antistatic compounds has a thickness representing a maximum of 1.5% of the total thickness of the structure.

15. Method of manufacturing the multilayer structure (2) of Claims 1 to 14, **characterised in that** it comprises
- the introduction of each material constituting each layer of the structure (2) into an extruder,
- the introduction of the material emerging from an extruder (10, 11, 12, 13) and forming a layer of the structure (2) into a central channel (140) of a distributor (14) supplying a die (15) for manufacturing multilayer sheets,
- the introduction of each of the materials emerging from the other extruders (10, 11, 12, 13) and forming the other layers of the structure into an element (141) of the distributor (14), these elements (141) being juxtaposed along the distributor (14) and each including a channel (142) which opens into the central channel (140) connected to the die (15).

## Patentansprüche

1. Mehrschichtige, durch Koextrusion gefertigte und für die Verpackung von Lebensmitteln bestimmte Struktur (2), **dadurch gekennzeichnet, dass** sie mindestens zwei übereinanderliegendene Schichten umfasst,
- eine Schicht (A) aus einer permanent antistatischen Verbindung auf der Basis von Polypropylen und Polyetherblockamiden (PEBA),
- eine Strukturschicht, erste Strukturschicht (B) genannt, bestehend aus einem Gemisch aus mit Maleinsäureanhydrid gepfropftem Polypyropylen-Homopolymer mit Polypropylen als Copolymer.

2. Struktur nach Patentanspruch 1, **dadurch gekennzeichnet, dass** das Polypropylen der ersten Strukturschicht (B) mindestens 30% Polypropylen-Copolymer umfasst.

3. Struktur nach Patentanspruch 1 oder 2, **dadurch gekennzeichnet, dass** sie eine Strukturschicht, zweite Strukturschicht (C) genannt, auf der ersten Strukturschicht (B) umfasst, wobei diese zweite Strukturschicht (C) Polypropylen enthält.

4. Struktur nach einem der Patentansprüche 1 bis 3, **dadurch gekennzeichnet, dass** sie eine Schicht für den Lebensmittelkontakt (D) umfasst, die außen auf der zweiten Strukturschicht angeordnet ist, die Polypyropylen höheren Fließvermögens enthält, als das Polypropylen der ersten Strukturschicht (B) und der zweiten Strukturschicht (C).

5. Struktur nach Patentanspruch 4, **dadurch gekennzeichnet, dass** zwischen die erste Strukturschicht (B) und die zweite Strukturschicht (C) eine Polymerschicht als Sauerstoffbarriere (E) eingefügt ist, wobei diese Sauerstoffbarriereschicht (E) mit der ersten Strukturschicht (B) und der zweiten Strukturschicht (C) durch eine Klebstoffschicht (L) verbunden ist, die auf Polypropylen gepfropftes Maleinsäureanhydrid umfasst.

6. Struktur nach Patentanspruch 5, **dadurch gekennzeichnet, dass** zwischen die Klebstoffschicht (L) der Sauerstoffbarrierenschicht (E) auf der zweiten Strukturschicht (C) und die zweite Strukturschicht (C) eine Strukturschicht, dritte Strukturschicht (F) genannt, eingefügt ist, die Polypropylen enthält.

7. Struktur nach Patentanspruch 4, **dadurch gekennzeichnet, dass** die erste Strukturschicht (B) in zwei verschiedene Schichten unterteilt ist, eine Strukturschicht, vierte Strukturschicht (F) genannt, die Polypropylen enthält, und eine Klebstoffschicht (L), die das Anhaften dieser letzten Strukturschicht (F) an der Antistatikschicht (A) sicherstellt und auf Polypropylen gepfropftes Maleinsäureanhydrid enthält.

8. Struktur nach irgendeinem der Patentansprüche 1 bis 7, **dadurch gekennzeichnet, dass** jede Strukturschicht (B, C, F) ein Gemisch auf der Basis von Polyolefin und organischen und/oder mineralischen Pigmenten zum Färben des Polypropylens umfasst.

9. Struktur nach Patentanspruch 5, **dadurch gekennzeichnet, dass** die Polymerschicht als Sauerstoffbarriere (E) auf der Basis von EVOH (Copolymer aus Ethylen und Polyvinylalkohol) beruht.

10. Struktur nach Patentanspruch 5, **dadurch gekennzeichnet, dass** die Polymerschicht als Sauerstoffbarriere (E) aus EVOH besteht.

11. Struktur nach irgendeinem der Patentansprüche 1 bis 10, **dadurch gekennzeichnet, dass** die erste (B), die dritte (F) und die vierte Strukturschicht (F) gemahlene, fertige Mehrschichtstruktur (2) umfassen.

12. Struktur nach irgendeinem der Patentansprüche 1 bis 11, **dadurch gekennzeichnet, dass** die erste Strukturschicht (B), die dritte Strukturschicht (F) und die vierte Strukturschicht (F) ein Gemisch auf Polyolefinbasis und aktivem und neutralisierendem Stoff umfassen, um die Wiederverwertung des gemahlenen Produktes zu erlauben, wenn dieses aus einer Struktur (2) gewonnn wird, die EVOH enthält.

13. Struktur nach irgendeinem der Patentansprüche 4 bis 12, **dadurch gekennzeichnet, dass** das Polypropylen der zweiten (C), dritten (F) und vierten Strukturschicht (F) auf einer Basis von Polypropylen-Homopolymer und/oder von Polypropylen-Copolymer beruht.

14. Struktur nach irgendeinem der Patentansprüche 1 bis 13, **dadurch gekennzeichnet, dass** die Schicht aus einer antistatischen Verbindung eine Dicke hat, die maximal 1,5% der Gesamtdicke der Struktur ausmacht.

15. Verfahren zur Herstellung der mehrschichtigen Struktur (2) der Patentansprüche 1 bis 14, **dadurch gekennzeichnet, dass** es umfasst
- Einbringen jeden Stoffes, der jeweils eine Schicht der Struktur (2) darstellt, in eine Strangpresse,
- Einbringen des aus einer Strangpresse (10, 11, 12, 13) austretenden und eine Schicht der Struktur (2) bildenden Stoffes in einen zentralen Kanal (140) eines Verteilers (14), der ein Spritzmundstück (15) zur Erzeugung mehrschichtiger Folien versorgt,
- Einbringen der aus den anderen Strangpressen (10, 11, 12, 13) austretenden und die anderen Schichten der Struktur bildenden Stoffe jeweils in ein Teil (141) des Verteilers (14), wobei diese Teile (141) am Verteiler (14) entlang nebeneinander angeordnet sind und jeweils einen Kanal (142) umfassen, der in den zentralen Kanal (140) mündet, der mit dem Spritzmundstück (15) verbunden ist.
